# EUROPEAN PATENT APPLICATION

(11) **EP 4 429 096 A1**
(43) Date of publication of application: **11.09.2024**
(21) Application number: 21963214.8
(22) Date of filing: 04.11.2021
(51) Int. Cl.: H02M 7/48

(54) **POWER CONVERSION DEVICE**

(71) Applicant: MITSUBISHI ELECTRIC CORPORATION, Chiyoda-ku Tokyo 100-8310 (JP)
(72) Inventor: KATAGIRI, Kodai, Tokyo 100-8310 (JP); SOTOME, Hideyuki, Tokyo 100-8310 (JP); UJINO, Makoto, Tokyo 100-8310 (JP)
(74) Representative: Meissner Bolte Partnerschaft mbB
(86) International application number: PCT/JP2021/040569
(87) International publication number: WO 2023/079617

(57) **Abstract**

The present invention includes: a drive unit (3) connected to a first electrical conduction path and a second electrical conduction path to which a voltage is applied, the drive unit (3) having a switching element (1) and a control unit (2) which supplies a control signal for controlling the switching element, the drive unit (3) being configured to drive, with use of a voltage obtained through conversion by control, a load (8) connected to the switching element (1) by a connection wire (9); a first line-to-line capacitor (5) and a second line-to-line capacitor (6) each connected between the first electrical conduction path and the second electrical conduction path; a choke coil (4) located on one electrical conduction path out of the first electrical conduction path and the second electrical conduction path and connected between the first line-to-line capacitor (5) and the second line-to-line capacitor (6); and a capacitor to ground (7), connected between a ground wire and another electrical conduction path to which the choke coil (4) is not connected out of the first electrical conduction path and the second electrical conduction path. Consequently, increase in electromagnetic noise due to mode conversion is suppressed without adding any element for attaining balance in impedance.

## Description

### TECHNICAL FIELD

The present invention relates to a power conversion device.

### BACKGROUND ART

Electromagnetic noises are generated from a power conversion device owing to an ON operation or an OFF operation of a switching element mounted thereon. Electromagnetic noises generated from a power conversion device are roughly classified into: common mode noise that propagates from a housing to the outside of an apparatus via the power conversion device and an impedance to ground generated between a ground potential and a wire or a load connected to the power conversion device; and differential mode noise that propagates between power supply lines and propagates to the outside of the apparatus.

When common mode noise flows through a circuit in which there is imbalance in impedance between a high-voltage side and a low-voltage side of the power supply lines, a problem arises in that differential mode noise is superimposed between the power supply lines. Such a phenomenon is called mode conversion of electromagnetic noises.

As a solution to this problem, for example, Patent Document 1 discloses a technology in which one of a pair of lines is provided with a first reactor and a rectifier element, and the other line is provided with a second reactor having the same specifications as those of the first reactor and a potential fluctuation-suppressing rectifier element having the same specifications as those of the rectifier element, thereby attaining balance in impedance between a high-voltage side and a low-voltage side of the power supply lines.

### CITATION LIST

### PATENT DOCUMENT

Patent Document 1: Japanese Patent JP 6 045 664 B1 (page 6, lines 17 to 40, FIG. 1)

### SUMMARY OF THE INVENTION

### PROBLEM TO BE SOLVED BY THE INVENTION

In the configuration in Patent Document 1, an element for attaining balance in impedance is added on the low-voltage side of the power supply lines, whereby a problem arises in that the number of parts is increased. In addition, in a case where the low-voltage side of the power supply lines is formed not by a wire, a pattern, or a busbar but by a ground such as a metal housing, a heatsink, or a printed board, it is difficult to add an element, and the configuration in Patent Document 1 is not applicable.

The present invention has been made to solve the above problems, and an object of the present invention is to suppress mode conversion of electromagnetic noises generated from a power conversion device, without adding any element for attaining balance in impedance.

### MEANS TO SOLVE THE PROBLEM

A power conversion device according to the present invention includes: a drive unit connected to a first wire and a second wire to which a voltage is applied, the drive unit having a switching element and a control unit which generates a control signal for controlling the switching element, the drive unit being configured to drive, with use of a voltage obtained through conversion by control, a load connected to the switching element by a connection wire; a first line-to-line capacitor and a second line-to-line capacitor each connected to the first wire and the second wire; a choke coil located on one wire out of the first wire and the second wire and connected between the first line-to-line capacitor and the second line-to-line capacitor; and a capacitor to ground, connected between a ground wire and another wire to which the choke coil is not connected out of the first wire and the second wire.

### EFFECT OF THE INVENTION

The power conversion device according to the present invention makes it possible to decrease imbalance in impedance relative to common mode noise, whereby mode conversion of electromagnetic noises generated from the power conversion device can be suppressed without adding any element for attaining balance in impedance.

### BRIEF DESCRIPTION OF THE DRAWINGS

FIG. 1 is a circuit diagram of a power conversion device according to Embodiment 1.
FIG. 2 is a circuit diagram in a case where a drive unit of the power conversion device according to Embodiment 1 is an inverter.
FIG. 3 is a circuit diagram in a case where the drive unit of the power conversion device according to Embodiment 1 is a converter.
FIG. 4 is a diagram for explaining propagation of a common mode noise current in the power conversion device according to Embodiment 1.
FIG. 5 is a schematic diagram showing an example of a case where mode conversion of electromagnetic noises does not occur.
FIG. 6 is a schematic diagram showing an example of mode conversion of electromagnetic noises.
FIG. 7 is a circuit diagram showing a configuration of a power conversion device in comparative example 1.
FIG. 8 is a circuit diagram showing a configuration of the power conversion device in comparative example 1.
FIG. 9 is a circuit diagram showing a configuration of a power conversion device in comparative example 2.
FIG. 10 is a circuit diagram showing a configuration of the power conversion device in comparative example 2.
FIG. 11 is another circuit diagram of the power conversion device according to Embodiment 1.
FIG. 12 is a circuit diagram showing a configuration of a power conversion device according to Embodiment 2.
FIG. 13 is a circuit diagram showing a configuration of a power conversion device according to Embodiment 3.
FIG. 14 is a circuit diagram showing a configuration of a power conversion device according to Embodiment 4.
FIG. 15 is a circuit diagram showing a configuration of a power conversion device according to Embodiment 5.

### DESCRIPTION OF EMBODIMENTS

Hereinafter, power conversion devices according to preferred embodiments of the present invention will be described with reference to the drawings. The same features and corresponding parts are denoted by the same reference characters, and detailed descriptions thereof will be omitted. In the subsequent embodiments as well, redundant descriptions of components denoted by the same reference characters will be omitted.

### Embodiment 1

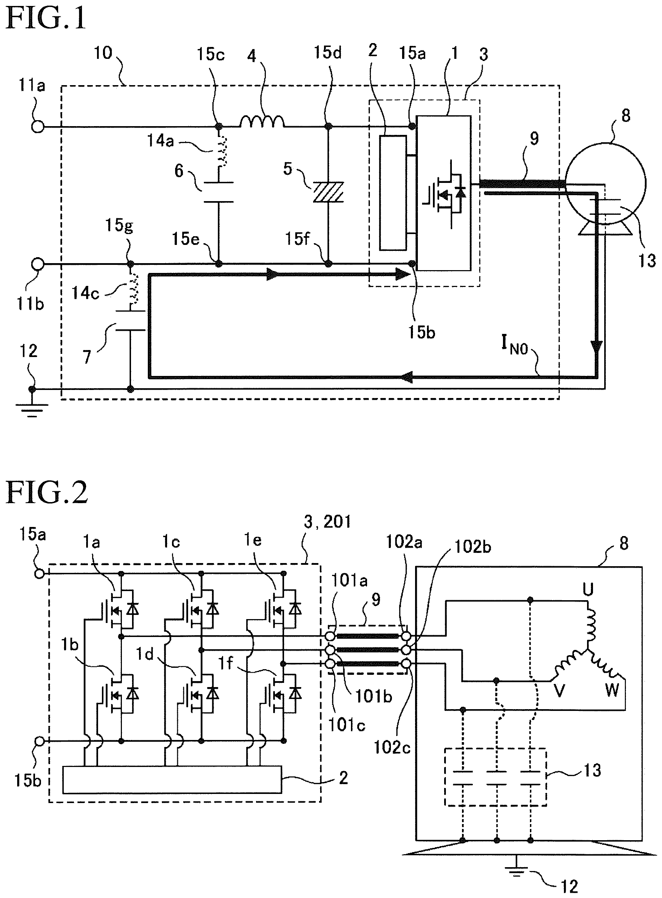

FIG. 1 is a circuit diagram of a power conversion device according to Embodiment 1. A power conversion device 10 performs voltage conversion from an arbitrarily-determined DC voltage inputted from input terminals 11a and 11b into an arbitrarily-determined AC voltage or DC voltage and drives a load 8. In a case where the output is AC voltage, the power conversion device 10 functions as a DC-AC converter (inverter). Meanwhile, in a case where the output is DC voltage, the power conversion device 10 functions as a DC-DC converter (converter).

The power conversion device 10 is composed of: a switching element 1; a control unit 2 which supplies a switching signal for opening/closing the switching element 1; a choke coil 4; a first line-to-line capacitor 5; a second line-to-line capacitor 6; and a capacitor to ground 7. The switching element 1 and the control unit 2 compose a drive unit 3. The drive unit 3 and the load 8 are connected to each other by a connection wire 9, and the load 8 is driven by the arbitrarily-determined AC power or DC power outputted from the drive unit. Parasitic inductances 14a and 14c are respectively present in the second line-to-line capacitor 6 and the capacitor to ground 7. In the drawing, the parasitic inductances are indicated by broken lines. Although a parasitic inductance is present also in the first line-to-line capacitor 5 or another connection wire, only components necessary for explaining advantageous effects of the present embodiment are shown in the drawing.

In order from the input terminal 11a, the positive-side terminal is connected in series to a connection terminal 15c of the second line-to-line capacitor, the choke coil 4, a connection terminal 15d of the first line-to-line capacitor, and a connection terminal 15a of the drive unit 3, whereby an electrical conduction path is formed.

Meanwhile, in order from the input terminal 11b, the negative-side terminal is connected in series to a connection terminal 15g of the capacitor to ground 7, a connection terminal 15e of the second line-to-line capacitor, a connection terminal 15f of the first line-to-line capacitor, and a connection terminal 15b of the drive unit 3, whereby an electrical conduction path is formed. In addition, another terminal of the capacitor to ground 7 is connected to a ground potential 12.

Although the input power is DC power in the present embodiment, the input power is not limited to DC power and may be AC power, and DC power obtained through conversion from the AC power by using a rectification circuit may be applied to the input terminals 11a and 11b.

Also, although the choke coil 4 is connected to the positive side and one of the terminals of the capacitor to ground 7 is connected to the negative side in the present embodiment, the configuration of the present invention is not limited thereto and may be a configuration in which the choke coil 4 is connected to the negative side and the connection terminal 15g of the capacitor to ground 7 is connected to the positive side.

Also, although the capacitor to ground 7 is disposed between the input terminal 11b and the connection terminal 15e of the second line-to-line capacitor in the present embodiment, the present invention is not limited thereto, and the capacitor to ground 7 may be disposed between the connection terminal 15e of the second line-to-line capacitor and the connection terminal 15f of the first line-to-line capacitor or between the connection terminal 15f of the first line-to-line capacitor and the connection terminal 15b of the drive unit 3.

Also, although one load 8 is driven by one drive unit 3 in the present embodiment, the present invention is not limited thereto and may be of a type in which a plurality of loads are driven by a plurality of drive units.

FIG. 2 shows an example of a circuit diagram in a case where the drive unit 3 is an inverter. For an inverter 201, connection is made from the input terminals 11a and 11b through the above connection to the connection terminals 15a and 15b. In the inverter 201, the control unit 2 controls opening/closing of switching elements 1a, 1b, 1c, 1d, 1e, and 1f which perform switching on arbitrarily-determined DC power inputted to the input terminals 11a and 11b, thereby performing conversion into arbitrarily-determined AC power for three phases which are a U phase, a V phase, and a W phase. The inverter 201 outputs the AC power from output terminals 101a, 101b, and 101c.

The output terminals 101a, 101b, and 101c of the inverter 201 and input terminals 102a, 102b, and 102c of the load 8 are connected to each other by the connection wires 9. Consequently, the arbitrarily-determined AC power, for the three phases which are the U phase, the V phase, and the W phase, which has been obtained by converting the DC power is inputted to the load 8, whereby the load 8 is driven.

Although metal-oxide-semiconductor field-effect transistors (MOSFETs) are used as the switching elements 1a, 1b, 1c, 1d, 1e, and 1f in FIG. 2, the switching elements are not limited thereto and may be switching elements other than MOSFETs, such as insulated-gate bipolar transistors (IGBTs) and thyristors.

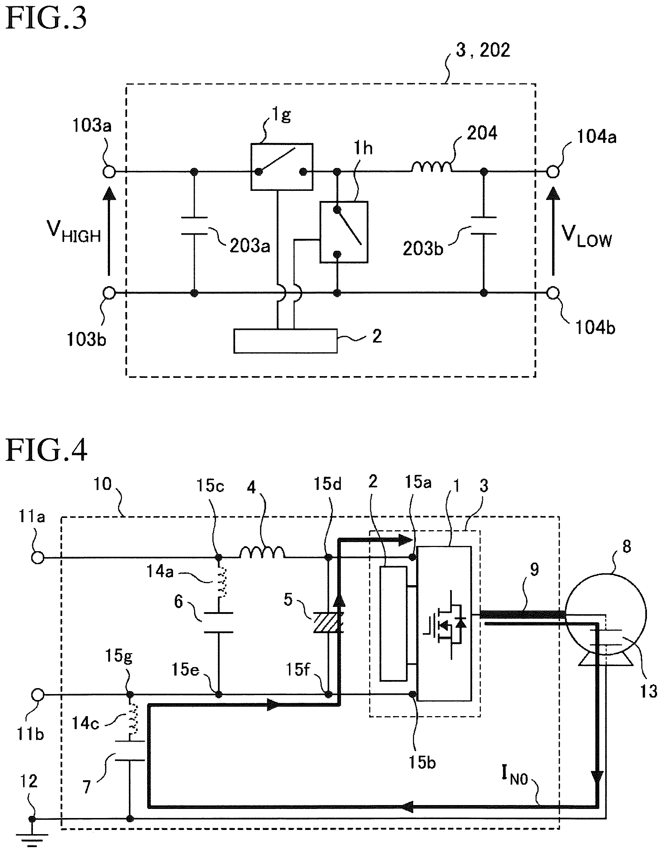

FIG. 3 shows an example of a circuit diagram in a case where the drive unit 3 is a converter. With a high-voltage V_{HIGH} side being set as an input side, a positive-side terminal 103a is connected to the connection terminal 15a in FIG. 1 and a negative-side terminal 103b is connected to the connection terminal 15b in FIG. 1, whereas, with a low voltage V_{LOW} side being set as an output side, a positive-side terminal 104a and a negative-side terminal 104b are connected to the connection wire 9 in FIG. 1. In this case, the drive unit 3 functions as a buck converter for stepping down a DC voltage.

Likewise, there is a case where, with the low voltage V_{LOW} side being set as an input side, the positive-side terminal 104a is connected to the connection terminal 15a in FIG. 1 and the negative-side terminal 104b is connected to the connection terminal 15b in FIG. 1, whereas, with the high-voltage V_{HIGH} side being set as an output side, the positive-side terminal 103a and the negative-side terminal 103b are connected to the connection wires 9 in FIG. 1. In this case, the drive unit 3 functions as a boost converter for stepping up a DC voltage.

A converter 202 is composed of: switching elements 1g and 1h; a smoothing capacitor 203a on a high-voltage side; a smoothing capacitor 203b on a low-voltage side; a reactor 204; and the control unit 2 which opens/closes the switching elements 1g and 1h and supplies a switching signal for controlling the load 8 in FIG. 1. In order from the positive-side terminal 103a on the high-voltage V_{HIGH} side, the positive-side terminal is connected in series to a positive-side terminal of the smoothing capacitor 203a, the switching element 1g, a positive-side terminal of the switching element 1h, the reactor 204, a positive-side terminal of the smoothing capacitor 203b, and the positive-side terminal 104a on the low voltage V_{LOW} side.

Meanwhile, in order from the negative-side terminal 103b on the high-voltage V_{HIGH} side, the negative-side terminal is connected in series to a negative-side terminal of the smoothing capacitor 203a, a negative-side terminal of the switching element 1h, a negative-side terminal of the smoothing capacitor 203b, and the negative-side terminal 104b on the low voltage V_{LOW} side.

In FIG. 1, a common mode noise current I_{N0} is known to propagate from a housing via an impedance to ground 13 of the load to the outside of the apparatus, and the capacitor to ground 7 has a function of providing a bypass to the common mode noise current I_{N0} by connecting the negative side of the power conversion device and the potential of the housing (ground potential 12) to each other with a low impedance at a high frequency. The common mode noise current I_{N0} provided with the bypass returns to the switching element 1 via the connection terminal 15a or 15b.

In a case where the common mode noise current I_{N0} returns to the switching element 1 via the connection terminal 15a, the common mode noise current I_{N0} provided with the bypass from the ground potential propagates from the negative side via the first line-to-line capacitor 5 to the positive side as shown in FIG. 4. Meanwhile, in a case where the common mode noise current I_{N0} returns to the switching element 1 via the connection terminal 15b, the common mode noise current I_{N0} provided with the bypass from the ground potential propagates straight through the negative side as shown in FIG. 1.

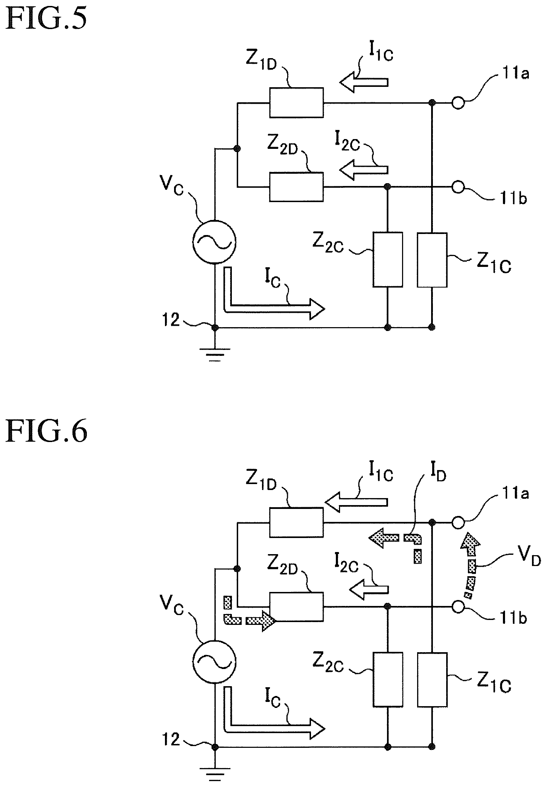

Here, mode conversion of electromagnetic noises will be described with reference to FIG. 5 and FIG. 6. When a common mode noise voltage Vc is applied between the ground potential 12 and an intermediate point between the input terminal 11a and the input terminal 11b, a common mode noise current Ic flows and branches into a common mode noise current lie on the positive side and a common mode noise current I_{2C} on the negative side.

At this time, in a case where a positive-side line impedance Z_{1D} and a negative-side line impedance Z_{2D} are equal to each other and a positive-side impedance to ground Zic and a negative-side impedance to ground Z_{2C} are equal to each other, i.e., in a case where there is balance in the impedances between the positive side and the negative side, I_{1C}=I_{2C} is satisfied, and there is no potential difference between the positive side and the negative side, as shown in FIG. 5.

Meanwhile, in a case where there is imbalance, in at least either of the line impedance and the impedance to ground, between the positive side and the negative side, the common mode noise currents are in the relationship of I_{1C}≠I_{2C}. In this case, as shown in FIG. 6, a differential mode noise voltage V_{D} is applied between the positive side and the negative side, whereby a differential mode noise current I_{D} is superimposed. In this manner, when common mode noises flow through a circuit in which there is imbalance in impedance, a differential mode noise is superimposed. Such a phenomenon is called mode conversion of electromagnetic noises.

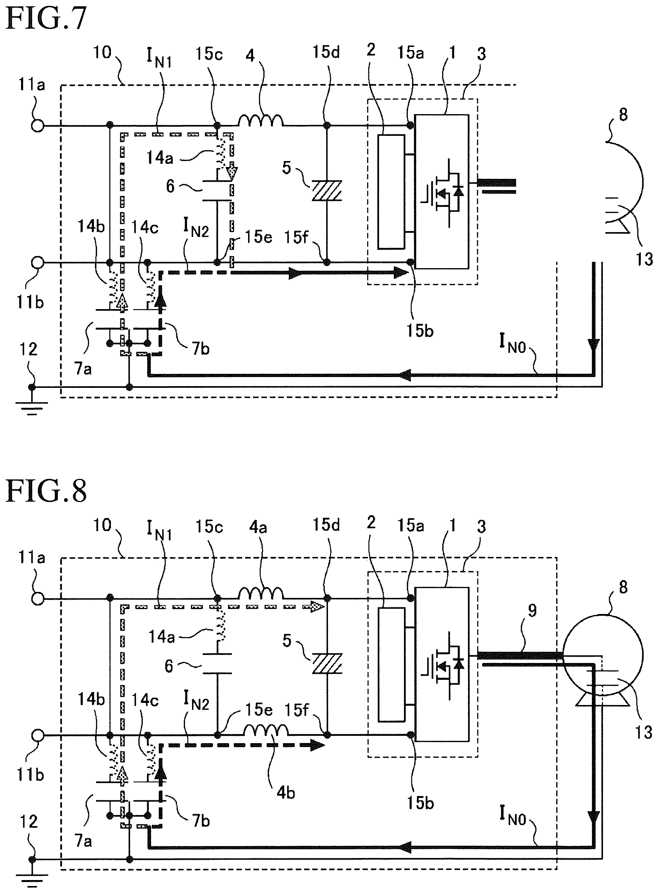

Comparative example 1 of the present embodiment is shown in FIG. 7. In this example, capacitors to ground 7a and 7b are respectively provided on the positive side and the negative side. In this case, a common mode noise current I_{N0} propagating from the housing via the impedance to ground 13 of the load to the outside of the apparatus branches into a common mode noise current I_{N1} provided with a bypass by the capacitor to ground 7a and a common mode noise current I_{N2} provided with a bypass by the capacitor to ground 7b.

Here, the choke coil 4 is a high-impedance element, and the second line-to-line capacitor 6 is a low-impedance element. Thus, the common mode noise current I_{N1} propagates via the second line-to-line capacitor 6 to the negative side. At this time, a combined impedance on the propagation path of the common mode noise current I_{N1} is higher than a combined impedance on the propagation path of the common mode noise current I_{N2} by the impedance of the second line-to-line capacitor 6. Consequently, imbalance between the impedances on the propagation paths occurs, and mode conversion of electromagnetic noises occurs.

Here, the impedance of the second line-to-line capacitor 6 includes influences of not only a capacitance but also a parasitic inductance 14a arising from an element, a wire, a busbar, or a cable. In addition, in a case where the capacitors to ground 7a and 7b have different impedances, there is a more significant imbalance between the combined impedances on the propagation paths of the common mode noise currents I_{N1} and I_{N2}. Here, the impedances of the capacitors to ground 7a and 7b include influences of not only capacitances but also parasitic inductances 14b and 14c arising from elements, wires, busbars, or cables. In comparative example 1, in order to eliminate the influence of such an imbalance in impedance, a choke coil 4b on the negative side is provided in addition to a choke coil 4a on the positive side as shown in FIG. 8. Consequently, balance in impedance between the positive side and the negative side is attained, whereby mode conversion of electromagnetic noises is suppressed.

Meanwhile, the present embodiment is such that, as shown in FIG. 1, the choke coil 4 is disposed on one of the positive side and the negative side, and the capacitor to ground 7 is disposed between the ground potential and the other one of the positive side and the negative side. Consequently, the common mode noise current I_{N0} is provided with a bypass by the capacitor to ground so as to flow to the negative side, whereby mode conversion of electromagnetic noises in FIG. 7 explained regarding comparative example 1 can be suppressed without adding any element such as one shown in FIG. 8.

Here, the second line-to-line capacitor 6 has the connection terminal 15c connected to one end of the choke coil 4 in FIG. 1, the first line-to-line capacitor 5 has the connection terminal 15d to which the other end of the choke coil 4 is connected, and, out of paths that extend from the connection terminal 15c to the connection terminal 15d, a path extending via the choke coil 4 may be set to have a higher impedance than a path extending via the second line-to-line capacitor 6 and the first line-to-line capacitor 5.

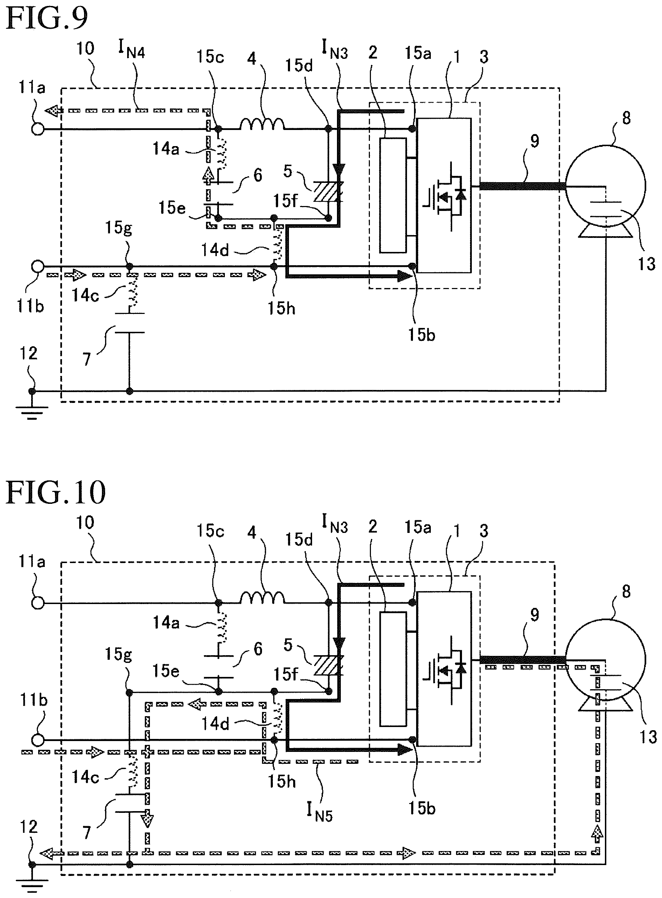

Also, comparative example 2 is such that, as shown in FIG. 9, the connection terminal 15f of the first line-to-line capacitor 5 and the connection terminal 15e of the second line-to-line capacitor 6 are connected at a common connection terminal 15h to the negative side. In this case, a part of a differential mode noise current I_{N3} provided with a bypass by the first line-to-line capacitor 5 branches off as a noise current I_{N4} and is provided with a bypass by the second line-to-line capacitor 6 so as to flow to the outside of the power conversion device 10.

Meanwhile, in FIG. 1 regarding the present embodiment, the connection terminal 15f of the first line-to-line capacitor 5 and the connection terminal 15e of the second line-to-line capacitor 6 are connected, not at the same position but at different positions, to the negative side on which no choke coil 4 is disposed. With such a configuration, the connection terminal 15f of the first line-to-line capacitor 5 and the connection terminal 15e of the second line-to-line capacitor 6 are connected, not at the same position, to the negative side on which no choke coil 4 is disposed, and the differential mode noise current provided with a bypass so as to flow to the outside of the power conversion device 10 can be decreased.

Although the side on which no choke coil 4 is disposed is the negative side in FIG. 1, the advantageous effects are exhibited also when this side is the positive side.

Also, comparative example 3 is an example of a power conversion device in which the connection terminal 15f of the first line-to-line capacitor 5, the connection terminal 15e of the second line-to-line capacitor 6, and the connection terminal 15g of the capacitor to ground are connected at the common connection terminal 15h to the negative side as shown in FIG. 10. In such a configuration, a part of a differential mode noise current I_{N3} provided with a bypass by the first line-to-line capacitor 5 flows to a parasitic inductance 14d at the common connection terminal, whereby the parasitic inductance 14d experiences a voltage fluctuation. Consequently, a common mode noise current I_{N5} is newly superimposed.

Meanwhile, in FIG. 1, the negative-side connection terminal 15g of the capacitor to ground 7 is set to be connected at a position that is not the same as, but is different from, the positions at which the connection terminal 15f of the first line-to-line capacitor 5 and the connection terminal 15e of the second line-to-line capacitor 6 are connected. With such a configuration, the negative-side connection terminal 15g of the capacitor to ground 7 is connected at a position that is not the same as, but is different from, the positions at which the connection terminal 15f of the first line-to-line capacitor 5 and the connection terminal 15e of the second line-to-line capacitor 6 are connected, whereby the common mode noise current to be newly superimposed can be decreased.

Also, there is a case where the connection terminal of the capacitor to ground 7 is connected to the positive side. In this case as well, the advantageous effects are exhibited with a similar configuration by connecting this connection terminal at a position that is not the same as, but is different from, the positions at which the connection terminal of the first line-to-line capacitor 5 and the connection terminal of the second line-to-line capacitor 6 are connected.

Although the side on which no choke coil 4 is disposed is the negative side in FIG. 1, the advantageous effects are exhibited also when this side is the positive side.

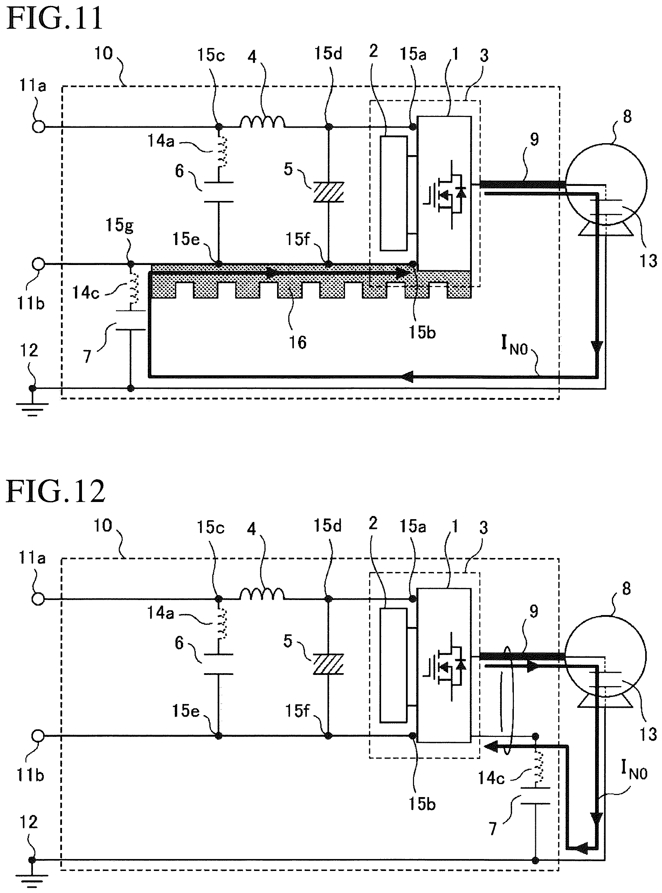

FIG. 11 shows an example where, in the power conversion device shown in FIG. 1, the choke coil 4 is disposed on the positive side, the capacitor to ground 7 is disposed between the negative side and the ground potential, and connection is made with the negative side including a heatsink. In such a structure as well, the same advantageous effects as those described above can be obtained. Although a configuration in which the negative side includes a heatsink 16 is employed in FIG. 11, there is no limitation to this configuration, and a configuration in which a metal housing is included may be employed.

Thus, the present embodiment is as follows. That is, in a case where the choke coil 4 is disposed on one of the positive side and the negative-side, the connection terminals of the first line-to-line capacitor 5 and the second line-to-line capacitor 6 are not connected at the same position, and the capacitor to ground 7 is disposed between the ground potential and the other one of the positive side and the negative side. Consequently, imbalance in impedance relative to common mode noise can be decreased, whereby mode conversion of electromagnetic noises generated from the power conversion device can be suppressed without adding any element for attaining balance in impedance.

### Embodiment 2

FIG. 12 shows an example of a power conversion device where, in the power conversion device shown in FIG. 1, the capacitor to ground 7 is disposed close to the connection wire 9. In such a structure as well, the same advantageous effects as those of the power conversion device according to Embodiment 1 can be obtained. Furthermore, the direction of a common mode noise current I_{N0} of the connection wire 9 and the direction of a common mode noise current I_{N0} of the capacitor to ground 7 are opposite to each other, and thus a parasitic inductance 14c of the capacitor to ground 7 is decreased.

Consequently, the impedance of the capacitor to ground 7 is further decreased, whereby the bypass effect for the common mode noise currents I_{N0} can be further improved. Here, the impedance of the capacitor to ground 7 includes not only an impedance of the element itself but also impedances of wires, busbars, or cables for connecting the capacitor to ground 7 to the ground potential and the positive side or the negative side. In addition, the closely disposed connection wire 9 and the wires, the busbars, or the cables for connecting the capacitor to ground 7 may not only be disposed close to each other but also be twisted together.

In such a structure, in a case where the choke coil 4 is disposed on the positive side, the capacitor to ground 7 is disposed between the negative side and the ground potential. Consequently, imbalance in impedance relative to common mode noise can be decreased, whereby mode conversion of electromagnetic noises generated from the power conversion device can be suppressed without adding any element for attaining balance in impedance. In addition, the same advantageous effects can be obtained also when the capacitor to ground 7 is wired to the positive side. In addition, the same advantageous effects can be obtained with a similar configuration also when the choke coil 4 is disposed on the negative side.

### Embodiment 3

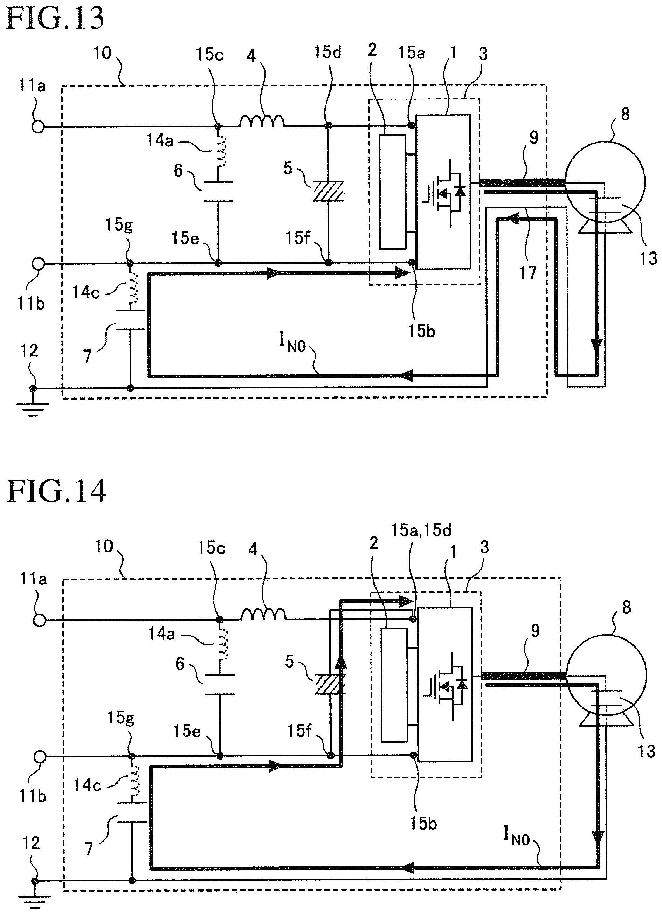

FIG. 13 shows an example of a power conversion device where, in the power conversion device shown in FIG. 1, the connection wire 9 is electrically shielded by a shield unit 17. In such a structure, in a case where the choke coil 4 is disposed on the positive side, the capacitor to ground 7 is disposed between the negative side and the ground potential. Consequently, imbalance in impedance relative to common mode noise can be decreased, whereby mode conversion of electromagnetic noises generated from the power conversion device can be suppressed without adding any element for attaining balance in impedance, and moreover, radiation noise generated from the connection wire 9 can be decreased. In addition, the same advantageous effects can be obtained also when the capacitor to ground 7 is wired to the positive side. In addition, the same advantageous effects can be obtained with a similar configuration also when the choke coil 4 is disposed on the negative side.

### Embodiment 4

FIG. 14 shows an example where, in the power conversion device shown in FIG. 1, the connection terminal 15d of the first line-to-line capacitor 5 is directly connected to the connection terminal 15a of the drive unit 3. In such a structure as well, the same advantageous effects as those of the power conversion device according to Embodiment 1 can be obtained. In addition, the parasitic inductance between the connection terminal 15d of the first line-to-line capacitor and the connection terminal 15a of the drive unit 3 is decreased. Consequently, the impedance between the connection terminal 15d of the first line-to-line capacitor and the connection terminal 15a of the drive unit 3 is further decreased, whereby the bypass effect for the noise currents I_{N0} can be further improved.

### Embodiment 5

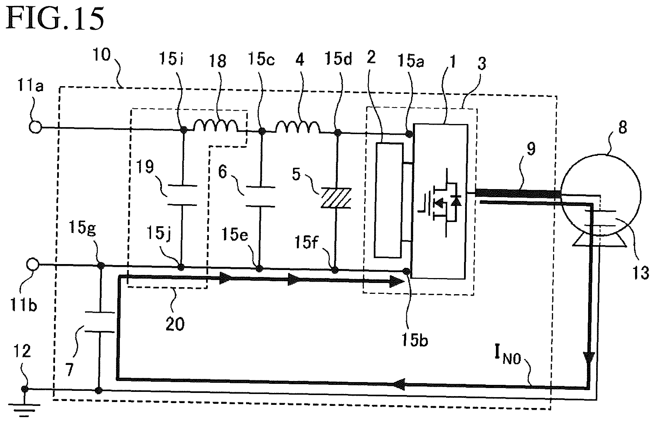

FIG. 15 shows an example where, in the power conversion device shown in FIG. 1, an LC filter 20 composed of a choke coil 18 and a third line-to-line capacitor 19 is added. Here, regarding the positive-side terminal, in order from the input terminal 11a, a connection terminal 15i of the third line-to-line capacitor 19, the choke coil 18, and the connection terminal 15c of the second line-to-line capacitor are connected in series between the input terminal 11a and the connection terminal 15c of the second line-to-line capacitor on a stage that precedes the second line-to-line capacitor 6.

Meanwhile, regarding the negative-side terminal, a connection terminal 15j of the third line-to-line capacitor 19 is connected in series between the connection terminal 15g of the capacitor to ground 7 and the connection terminal 15e of the second line-to-line capacitor. In such a configuration as well, the same advantageous effects as those of the power conversion device according to Embodiment 1 can be obtained.

In addition, the negative-side connection terminal 15g of the capacitor to ground 7 is connected at a different position without connection, at the same position, of the connection terminal 15f of the first line-to-line capacitor 5, the connection terminal 15e of the second line-to-line capacitor 6, and the connection terminal 15j of the third line-to-line capacitor 19.

With such a configuration, the differential mode noise current provided with a bypass so as to flow to the outside of the power conversion device 10 and the newly superimposed common mode noise current can be decreased. In addition, the effect of decreasing differential mode noise generated from the drive unit 3 can be further improved by the choke coil 18 and the third line-to-line capacitor 19. In addition, the same advantageous effects can be obtained also when the capacitor to ground 7 is wired to the positive side.

The same advantageous effects can be obtained with a similar configuration also when at least one of the choke coil 4 and the choke coil 18 is disposed on the negative side.

In the present embodiment, the number of the LC filters 20 having been added is one. However, without limitation thereto, a plurality of the LC filters may be added.

Although the invention is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the invention.

It is therefore understood that numerous modifications which have not been exemplified can be devised without departing from the scope of the specification of the present invention. For example, at least one of the constituent components may be modified, added, or eliminated. At least one of the constituent components mentioned in at least one of the preferred embodiments may be selected and combined with the constituent components mentioned in another preferred embodiment.

### DESCRIPTION OF THE REFERENCE CHARACTERS

1, 1a, 1b, 1c, 1d, 1e, 1f, 1g, 1h switching element
2 control unit
3 drive unit
4, 4a, 4b choke coil
5 first line-to-line capacitor
6 second line-to-line capacitor
7, 7a, 7b capacitor to ground
8 load
9 connection wire
10 power conversion device
11a input terminal
11b input terminal
12 ground potential
13 impedance to ground of load
14a, 14b, 14c, 14d parasitic inductance
15a, 15b, 15c, 15d, 15e, 15f, 15g, 15h, 15i, 15j connection terminal
16 heatsink
17 shield unit
18 choke coil
19 third line-to-line capacitor
20 LC filter
101a, 101b, 101c output terminal
102a, 102b, 102c input terminal
103a, 104a positive-side terminal
103b, 104b negative-side terminal
201 inverter
202 converter
203a, 203b smoothing capacitor
204 reactor

## Claims

1. A power conversion device comprising:
a drive unit connected to a first electrical conduction path and a second electrical conduction path to which a voltage is applied, the drive unit having a switching element and a control unit which generates a control signal for controlling the switching element, the drive unit being configured to drive, with use of a voltage obtained through conversion by control, a load connected to the switching element by a connection wire;
a first line-to-line capacitor and a second line-to-line capacitor each connected to the first electrical conduction path and the second electrical conduction path;
a choke coil located on one electrical conduction path out of the first electrical conduction path and the second electrical conduction path and connected between the first line-to-line capacitor and the second line-to-line capacitor; and
a capacitor to ground, connected between a ground wire and another electrical conduction path to which the choke coil is not connected out of the first electrical conduction path and the second electrical conduction path.

2. The power conversion device according to claim 1,
wherein the other electrical conduction path includes a metal housing or a heatsink.

3. The power conversion device according to claim 1 or 2,
wherein the second line-to-line capacitor has a connection terminal to which one end of the choke coil is connected, the first line-to-line capacitor has a connection terminal to which another end of the choke coil is connected, and, out of paths from the connection terminal of the second line-to-line capacitor to the connection terminal of the first line-to-line capacitor, a path extending via the choke coil is set to have a higher impedance than a path extending via the second line-to-line capacitor and the first line-to-line capacitor.

4. The power conversion device according to any one of claims 1 to 3,
wherein the first line-to-line capacitor and the second line-to-line capacitor are connected at different positions to the other electrical conduction path.

5. The power conversion device according to any one of claims 1 to 3,
wherein the capacitor to ground, the first line-to-line capacitor, and the second line-to-line capacitor are connected at different positions to the first electrical conduction path or the second electrical conduction path.

6. The power conversion device according to any one of claims 1 to 5,
wherein the electrical conduction path to which the capacitor to ground is connected is disposed close to the connection wire such that a direction of current flowing through said electrical conduction path is opposite to a direction of current flowing through the connection wire.

7. The power conversion device according to any one of claims 1 to 6,
wherein the connection wire is electrically shielded.

8. The power conversion device according to any one of claims 1 to 7,
wherein the first line-to-line capacitor is directly connected to the drive unit.

9. The power conversion device according to any one of claims 1 to 8,
further comprising an LC filter composed of: a third line-to-line capacitor connected to the first electrical conduction path and the second electrical conduction path and located on a stage preceding the second line-to-line capacitor; and a choke coil located on one electrical conduction path out of the first electrical conduction path and the second electrical conduction path and connected between the second line-to-line capacitor and the third line-to-line capacitor.
